# EUROPEAN PATENT SPECIFICATION

(11) **EP 4 458 147 B1**
(45) Date of publication and mention of the grant of the patent: **06.08.2025**
(21) Application number: 23382417.6
(22) Date of filing: 05.05.2023
(51) Int. Cl.: A01M 1/02, A01M 1/10, A01M 1/20

(54) **DIPTEROUS INSECT ATTRACTING DEVICE AND TRAP USING SAID DEVICE**
VORRICHTUNG ZUM ANLOCKEN VON ZWEIFLÜGLIGEN INSEKTEN UND DIESE VORRICHTUNG VERWENDENDE FALLE
DISPOSITIF D'ATTRACTION D'INSECTES DIPTÈRES ET PIÈGE UTILISANT LEDIT DISPOSITIF

(43) Date of publication of application: 06.11.2024
(73) Proprietor: Probodelt S.L., 43870 Amposta (ES)
(72) Inventor: Roig Piñas, Anna, 43870 AMPOSTA (ES); Ramoneda Molins, Joan, 43870 AMPOSTA (ES); Roig Piñas, Jaume, 43870 AMPOSTA (ES); Roig Reverté, Jordi, 43870 AMPOSTA (ES); Roig Piñas, Josep, 43870 AMPOSTA (ES)
(74) Representative: Isern Patentes y Marcas S.L.

(56) References cited:
- WO-A1-2021/152519
- US-A- 1 968 954
- US-A- 4 662 103
- US-A- 4 747 539
- US-A1- 2005 238 713
- US-B2- 7 712 248

## Description

### TECHNICAL FIELD OF THE INVENTION

The present invention relates to a device capable of containing and dispensing an attractant for fruit flies, particularly for attracting *Drosophila suzukii,* and to a trap for capturing and eliminating such insects using the mentioned device.

### STATE OF THE ART

Fruit flies, which belong to the order Diptera, are known to damage ripe fruits, such as blueberries, cherries, mango, kiwi, etc. Among dipterous insects, Drosophila is detrimental to the fruit ripening period and, due to the growth of organic and integrated pest management (IPM) crops which require pest control techniques that, above all, avoid fumigating farms with chemical agents, it has been necessary to implement safe methods for pest prevention, control, and treatment.

To avoid fumigation, the use of attractants alone or in combination with traps or mass trapping techniques where insects are attracted by means of an attractant to a trapping chamber or confinement chamber of a closed trap has been widely used. Once the insects are inside the confinement chamber, it is difficult for them to find their way out. Traps usually have an insecticide added to the inner area thereof to kill the insects once they have entered the trapping chamber.

With respect to devices capable of diffusing into the air a volatile substance such as, for example, an attractant, US patent document US 5,242,111 discloses a liquid dispenser consisting of a sealed flexible bag containing an active liquid, a wick, and an emanator connected with the wick, wherein said emanator diffuses the active liquid and said wick is enveloped by an impermeable tubular element which is open at each end. The active liquid supply inside the bag is kept isolated from the wick prior to use by means of a containment element such that upon removal of said containment member, the active liquid can come into contact with the wick, with the wick conveying the active liquid to the emanator for slow dispersion. The bag gradually collapses inward as the active liquid supply is depleted, obviating the need for a vent. The liquid dispensing device could be used as an air freshener, diffusing a volatile scent-producing liquid into the atmosphere. The device could also be adapted to dispense pharmaceuticals transdermally. In another modification, the device could be used to dispense vegetative nutrients to cultivated soil or into the water of hydroponic vegetation.

In the device described in the aforementioned patent, the wick is intended to be in contact with the volatile substance at all times, so that once the containment element has been removed, the substance diffuses outward until it is completely consumed. In that sense, the mentioned device does not have a way to deactivate the diffusion, which results in a clear drawback, insofar as under certain circumstances it may be convenient to interrupt the diffusion.

On the other hand, alternative devices designed to volatilize a liquid substance into the environment through a wick seem to work adequately when the temperature and atmospheric pressure are stable and certain values of room temperature are not exceeded. However, a problem arises when such devices are located in a farm which is subjected to constant changes in temperature or atmospheric pressure that in turn can generate pressure changes inside the receptacle containing the substance and/or changes in the vapor pressure of the stored liquid composition which ultimately hinders or prevents the diffusion of the liquid to the outside, so that the effectiveness of the device decreases in use or the device stops working altogether.

Likewise and associated with the described problem, depending on the composition of the liquid used for diffusion, it is possible that a part of the composition evaporates and is not diffused, while the remaining part does, such that the composition does not act in its entirety when diffused to the outside. Therefore, the effectiveness of the use thereof cannot be guaranteed, nor can the expected duration of use.

An insect attracting device according to the preamble of claim 1 is known from US 4,662,103.

Therefore, an attractant composition for attracting insects, particularly dipterous insects, arranged in the field in a device such as the one above or the like will not satisfactorily perform the functions for which it has been conceived.

There is therefore a need to provide new devices containing attractant compositions and traps associated with said devices which are capable of overcoming the drawbacks that have been described, while maintaining the effectiveness in attracting and capturing dipterous insects at the same time.

### BRIEF DESCRIPTION OF THE INVENTION

The claimed device comprises a container configured to contain an attractant composition in liquid state, the container being provided with an upper opening and a lower opening arranged in a base of said container, wherein the lower opening is closed by a cover which is coupled to said base in a releasable or permanent manner, wherein the container and the cover are impermeable to the attractant.

The device also comprises a wick coupleable to the base in connection with the lower opening, the wick being configured to diffuse said attractant composition by capillarity. "In connection" means that a portion of the wick is exposed to the lower opening, such that the attractant composition comes into contact with the wick through the lower opening.

It is important to point out that the cover is coupled to the base such that it seals the lower opening, fixing at least one segment of the wick including the portion thereof which is in connection with the lower opening, with at least one free end of the wick being exposed, i.e., without being fixed to the cover. It should also be pointed out that the cover secures or fixes the segment of the wick in such a way that does not prevent diffusion, but rather ensures that the diffusion of the attractant composition is only carried out through the wick, i.e., that there is no leakage through the lower opening when the composition diffuses by capillarity from the container to the free end of the wick where it evaporates completely.

The device further comprises a cap coupled in a leak-tight manner to the upper opening of the container, closing said upper opening, wherein the cap is also impermeable to the attractant. The main function of the cap, i.e., the main function for which it is configured, consists of balancing the pressure inside the device (receptacle closed by the cap) with the atmospheric pressure outside said device, such that the attractant solution is dispensed continuously in a controlled manner until it is completely depleted, regardless of the variations in atmospheric conditions.

In subsequent paragraphs, reference to the "device" shall be understood to mean the receptacle closed by the cap and the cover arranged in the base sealing the lower opening, fixing the wick, with the free end of the wick being the only means for the diffusion of the attractant composition.

Changes in the pressure inside the device can be due to changes in room temperature outside the device, for example, changes that can occur when the device is arranged in the crop field and exposed to the atmospheric conditions typical of such a location. Therefore, slight modifications in the temperature or pressure outside the device can cause changes, for example, at the phase level as a function of the vapor pressure of the attractant solution which can increase or reduce the pressure of the gas confined inside the device.

An increase in pressure will cause the gas inside the device to expand, so and in order to balance said pressure inside the device with the outside, the cap swells to balance the excess pressure. In contrast, when the pressure inside the device is less than the outside, the cap collapses to balance the negative pressure.

In any case and as mentioned in the preceding lines, the function of the cap is to balance the pressure of the gas of the attractant solution (vapor) and/or air confined inside the device with the pressure outside the device, such that diffusion through the wick is performed constantly until the attractant solution is depleted.

Another advantage of balancing pressures by means of the described teachings is that the attractant solution is dispensed/diffused at the indicated concentration thereof. As is known, an attractant solution/composition comprises at least one solute and a solvent at an indicated concentration for performing the functions of attracting the target dipterous insect. However, both the solute and the solvent can have different vapor saturation pressures which may cause, in changing pressure situations, at least a part of said solution with higher vapor pressure to evaporate, while the other to be in liquid state. Diffusion under these conditions will cause the diffusion of only a part of said attractant composition, so the effectiveness of the attractant decreases or becomes insignificant.

Therefore, advantageously, in the device of the present invention, by balancing pressures by means of the cap, the attractant composition maintains its indicated concentration and is diffused in a controlled manner through the wick at said indicated concentration, maintaining its effectiveness until it is depleted.

In addition to the foregoing, when the container contains the attractant composition, the attracting device is configured to be arranged between two positions, i.e., an activated position for diffusing the attractant composition through the wick and a deactivated position in which the attractant composition is not diffused through the wick.

Therefore, in order to be able to be in such activated or deactivated positions, said device is invertible such that, in the deactivated position, the attractant composition is not in contact with the wick, with said attractant composition being deposited or moved towards the cap, and in the activated position, the device is tipped such that the attractant composition comes into contact with the wick, such that the attractant composition is oriented or deposited towards the base and the cover.

Likewise, in any embodiment of the invention, the container is rigid, while the cap is flexible, to enable performing the described functions.

In an alternative embodiment, wherein the material of the container is selected from a list consisting of a polymer material impermeable to the attractant composition, wherein said material is selected from the list consisting of polyethylene, high density polyethylene, medium density polyethylene, and low density polyethylene, copolymers of polyethylene, polypropylene, copolymers of polypropylene, polystyrene, polyethylene terephthalate, poly(methyl methacrylate), poly(styrene-acrylonitrile), acrylonitrile butadiene styrene, and mixtures thereof.

In that sense, in alternative embodiments, the cap is coupled to the upper opening by heat sealing, by means of leak-tight snap-fitting, or by means of leak-tight screwing.

With respect to the materials of the cap, they are impermeable to the attractant composition and comprise a polymer material which is selected from the list consisting of polyethylene (PE), high density polyethylene, medium density polyethylene, and low density polyethylene, copolymers of polyethylene, polypropylene (PP), copolymers of polypropylene, polystyrene (PS), polyethylene terephthalate (PET), poly(methyl methacrylate) (PMMA), poly(styreneacrylonitrile) (SAN), acrylonitrile butadiene styrene (ABS), and mixtures thereof.

On the other hand, as mentioned, when the wick is fixed to the base through the cover, at least one segment of said wick is free, i.e., not fixed through the cover, wherein preferably the wick is flexible and coupled through the cover to the base such that there are two free ends thereof opposite the base, wherein the attractant composition is diffused without dripping along the free ends of the wick. The latter means that the length of each of the free ends of the wick is such that the attractant composition diffusing up until said ends evaporates or volatilizes before reaching the tip of each end of the wick, preventing the attractant from dripping.

On the other hand, the wick is manufactured with a material comprising yarns which in turn comprise fibers of a material selected from the list consisting of cotton, polyamide, polyurethane, and polyester.

In alternative embodiments, the attractant composition is an attractant composition in the form of an alcoholic solution comprising an alcohol, preferably ethanol, acetic acid, methionol, and optionally acetoin and/or putrescine, methionol, ethyl acetate, and/or diacetyl.

In other alternative embodiments, the attractant composition is a water-based solution.

In alternative embodiments, the target dipterous insect to be attracted is of the Drosophila type, particularly *Drosophila suzukii.*

In an alternative embodiment, the container comprises, in at least one portion of the outer surface thereof, a layer comprising a contact insecticide such that, in addition to attracting the dipterous insects, the device is capable of killing the dipterous insects without capturing them.

In another embodiment, the invention discloses a trap for dipterous insects, wherein the trap comprises a trapping chamber confined by a cover coupleable to said chamber, the trapping chamber being provided with at least one inlet suitable for allowing the entry of dipterous insects, and at least one contact insecticide arranged coating at least one portion of an inner wall of the trapping chamber; wherein the trap further comprises the attracting device according to the described teachings.

According to this embodiment, the invention provides a device capable of attracting dipterous insects to a trap in which said dipterous insects are trapped and poisoned by the contact insecticide.

It is important to point out that the trap incorporating the dipterous insect attracting device as described presents a significant advantage in relation to the ability of being activated/deactivated for diffusing the attractant composition given that, when said trap is not in use, for example, immediately after being acquired by a user, the device is in the deactivated position, and for putting said trap to use, the trap is arranged in the field, for example, by hanging it from a suitable location, such that the device transitions to the activated position for diffusing the attractant. In that sense, the trap is likewise conceived as a "invertible" trap such that, in the deactivated position of the device, the trap rests on the cover, whereas in the activated position of the device, the trap is tipped completely and can be suspended from the cover.

### BRIEF DESCRIPTION OF THE FIGURES

The foregoing and other advantages and features will be more fully understood from the following detailed description of exemplary embodiments with reference to the accompanying drawings, which should be considered by way of illustration and not limitation, wherein:
- Figure 1 is a sectional elevational view of the dipterous insect attracting device of the invention.
- Figure 2 is a sectional perspective view of the dipterous insect attracting device of the invention.
- Figure 3 is a view of the trap of the invention in which the attracting device is used.

### DETAILED DESCRIPTION OF THE INVENTION

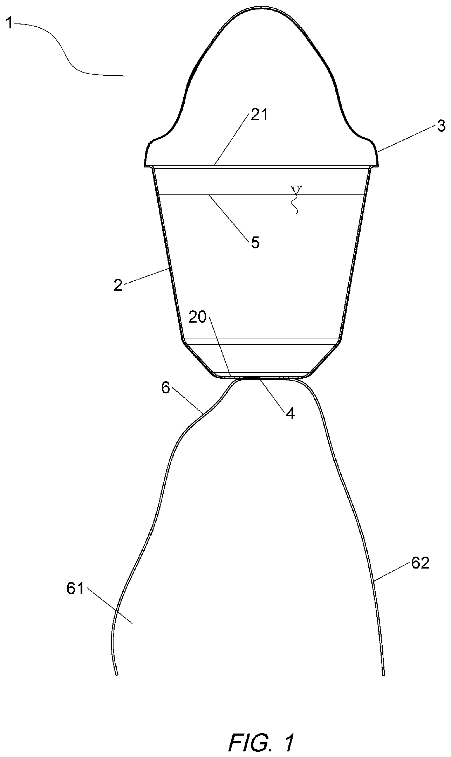

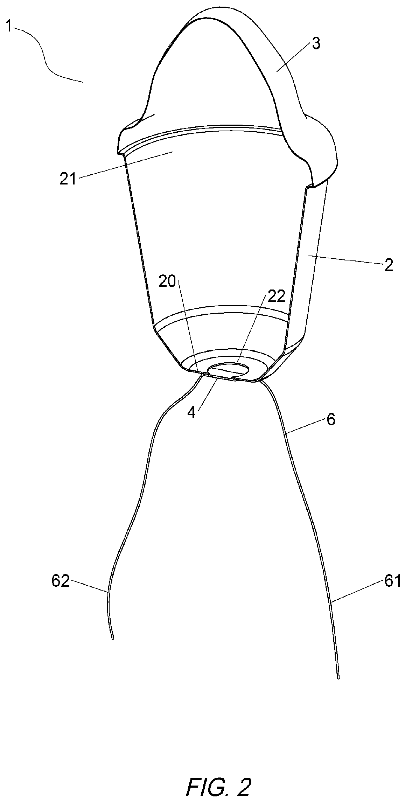

The first aspect of the present invention, illustrated in Figures 1 and 2, relates to a dipterous insect attracting device 1, comprising:
a container 2 having an upper opening 21, at least one lower opening 22 arranged in a base 20 of the container 2, wherein said lower opening 22 is sealed by a cover 4 in turn coupleable to said container 2, wherein said container 2 is configured to contain an attractant composition 5, with the container 2 and the cover 4 being impermeable to the attractant composition 5;
a wick 6 coupleable to the lower opening 22, configured to diffuse said attractant composition 5 by capillarity, wherein the cover 4 is configured to secure the wick 6 in the base 20, such that the attractant composition 5 can only be diffused through said wick 6; and
a cap 3 coupled in a leak-tight manner to the upper opening 21 of the container 2 closing said upper opening 21, with the cap 3 being impermeable to the attractant composition 5, the cap 5 being configured to collapse or swell;
wherein the attracting device 1 is configured, for when the container 2 contains said attractant composition 5, to be arranged in an activated position suitable for diffusing the attractant composition 5 through the wick 6, and to be arranged in a deactivated position in which the attractant composition 5 is not diffused through the wick 6, wherein said cap 3 is configured to collapse or swell in order to maintain a controlled dispensing of the attractant composition 5 through the wick 6 over time.

In a preferred embodiment, the cap 3 is configured to swell and to thereby relieve the pressure inside the device 1 due to the expansion of the attractant composition 5 when at least a part of said composition evaporates. Otherwise, that is, when the pressure inside the device 1 is equal to or less than the atmospheric pressure, the cap 3 is configured to contract or collapse as the attractant composition 5 is dispensed in a controlled manner through the wick 6.

In a preferred embodiment, the cap 3 is coupleable to the container 2 through a lip arranged adjacent to the upper opening 21, preferably by a heat welding/sealing process.

As indicated above, the device comprises a wick 6 coupleable to the base 20 in connection with the lower opening 22, wherein the arrangement of the wick in the base 20 is carried out such that a portion of said wick 6 is exposed to the lower opening 22, so the attractant composition comes into contact with the wick 6 through the lower opening 22.

According to the foregoing, the cover 4 is coupled to the base 20 such that it seals the lower opening 22, fixing at least one segment of the wick 6 including the portion thereof which is in connection with the lower opening 22, with two free ends 61, 62 of the wick 6 remaining exposed, as seen in Figure 1 in the preferred embodiment, i.e., without being fixed through the cover 4.

The technique used for fixing the cover 4 in the base 20 securing or fixing the segment of the wick 6 must be in such a way that does not prevent diffusion, i.e., the wick 6 should not be impermeable, so as to ensure the diffusion of the attractant composition 5 through said wick 6, i.e., there is no leakage through the lower opening 22 or through any other site, when the device 1 is in the activated position, when the composition diffuses by capillarity from the container to the free end of the wick where it evaporates completely.

In the preferred embodiment, the cover 4 consists of a polyethylene sheet which seals the wick 6 against the base 20, sealing the lower opening 22 according to the described teachings.

In another preferred embodiment of the device 1, the container 2 is a rigid container made of at least one impermeable polymer material selected from the list consisting of polyethylene (PE), high density polyethylene, medium density polyethylene, and low density polyethylene, copolymers of polyethylene (PE), low density polyethylene, high density polyethylene, polypropylene (PP), copolymers of polyethylene, copolymers of polypropylene, polystyrene (PS), polyethylene terephthalate (PET), poly(methyl methacrylate) (PMMA), poly(styreneacrylonitrile) (SAN), acrylonitrile butadiene styrene (ABS), and mixtures thereof. More preferably, it is selected from the list consisting of polyethylene (PE), high density polyethylene, medium density polyethylene, and low density polyethylene and polypropylene.

The device 1 is configured such that, in the deactivated position, the container 2 is oriented towards the cap 3, so the attractant composition 5 is oriented or deposited towards said cap 3, whereas in the activated position, the container 2 is rotated, such that the attractant composition 5 is deposited or moved towards the base 20, causing the wick 6 to come into contact with the attractant composition 5.

As mentioned in the preceding lines, the wick 6 is suitable for releasing the attractant composition 5 by capillarity, preferably wherein said wick 6 is manufactured with a material provided with yarns comprising fibers of a material selected from the list consisting of cotton, polyamide, polyurethane, and polyester.

In another preferred embodiment, the cover 4 comprises a material made of a sheet comprising an aluminum material and/or a sheet comprising a polymer material impermeable to the attractant composition 5, wherein in the case of the polymer material, it is selected from the list consisting of polyethylene (PE), high density polyethylene, medium density polyethylene, and low density polyethylene, copolymers of polyethylene, polypropylene (PP), copolymers of polypropylene, polystyrene (PS), polyethylene terephthalate (PET), poly(methyl methacrylate) (PMMA), poly(styrene-acrylonitrile) (SAN), acrylonitrile butadiene styrene (ABS), and mixtures thereof.

With respect to the materials of the cap 3, they are impermeable to the attractant composition and comprise a polymer material which is selected from the list consisting of polyethylene (PE), high density polyethylene, medium density polyethylene, and low density polyethylene, copolymers of polyethylene, polypropylene (PP), copolymers of polypropylene, polystyrene (PS), polyethylene terephthalate (PET), poly(methyl methacrylate) (PMMA), poly(styreneacrylonitrile) (SAN), acrylonitrile butadiene styrene (ABS), and mixtures thereof.

Alternatively, the cap 3 and/or the cover 4 are coupleable in their respective positions to the container 2, preferably by heat sealing, and/or by means of snap fitting, and/or by means of screwing. When the cap 3 and/or the cover 4 are coupleable in their respective positions to the container 2 by means of screwing, the cover 4 can be a stopper.

As mentioned above, when there is a negative pressure inside the device, i.e., vacuum formation, the cap 3 is capable of collapsing in order to withstand the vacuum pressure, balancing the internal pressure with the external pressure, maintaining the controlled dispensing of the attractant composition 5 through the wick 6.

On the other hand, when the pressure inside the device 1 increases due to, for example, an increase in room temperature which leads to the evaporation of at least a part of the attractant composition 5, the cap 3 expands or swells, whereby relieving the increase in pressure, maintaining the proper dispensing of the attractant composition 5. In another preferred embodiment of the device 1 of the first aspect, the container 2 has a dimension suitable for containing a volume of the attractant composition 5 of between 45 ml and 500 ml. More preferably, the container 2 has a volume of between 50 ml and 550 ml.

In another preferred embodiment, the device 1 is configured such that the lower part has a frustoconical shape to improve the release of the attractant 5 and to ensure that this release always takes place, although the device can be located slightly titled when it is in use in the field.

Therefore, as a result of the impermeability of the container 2, the cap 3, and the cover 4, as well as the configuration of the wick 6 and the tipping/activation system, the device 1 has the advantage of allowing the release or diffusion of the attractant composition 5 through the wick 6, allowing a controlled and/or sustained release over time that is, at the same time, effective and without wasting any attractant composition 5, where said controlled and sustained release can be maintained despite atmospheric changes.

In the deactivated position, the container 2 is arranged such that the attractant composition 5 is moved towards or leans against the cap 3, such that the portion of the wick 6 in connection with the lower opening 22 does not come into contact with the attractant composition 5. When the device 1 is tipped, i.e., the container 2 is rotated on itself sufficiently, the attractant composition 5 is oriented towards the base 20 of the container, coming into contact with the wick 6 for its diffusion, with the device 1 thereby being in the activated position. Performing the reverse process will be enough to transition to the deactivated position.

The wick 6 can be flexible or rigid and have a transverse area in any shape. In a preferred embodiment, the wick 6 is flexible and made of a material comprising yarns comprising fibers of a material selected from the list consisting of cotton, polyamide, and polyester, or any material suitable for diffusing the attractant composition 5 by capillarity according to the composition thereof as will be described in detail below. The wick 6 has the advantage of not causing the dripping of the attractant composition 5 but rather the sustained and controlled diffusion thereof over time.

In one embodiment, the device works very well for attracting Drosophila type dipterous insects, particularly *Drosophila suzukii,* with the attractant composition 5 being configured as an attractant solution 5 preferably formulated for attracting said *Drosophila suzukii.* In a preferred embodiment of the first aspect, the device 1 comprises an alcoholic composition arranged in the container 2.

Based on the foregoing, the device 1, particularly the container 2, is suitable for housing and releasing the attractant composition 5 the composition of which is based on alcohol and comprises attractant substances for attracting dipterous insects (Diptera), preferably for attracting Drosophila, and more preferably for attracting *Drosophila suzukii* (Matsamura).

In this exemplary embodiment, the term attractant composition 5 or attractant substance based on alcohol, also referred to as alcoholic attractant compositions, is understood to mean compositions essentially comprising an alcohol, at least one alcohol selected from the list comprising straight chain, branched, or cyclic C₁-C₁₀, preferably C₁-C₅, alcohols. Preferably, the alcoholic attractant composition 5 comprises an alcohol in a percentage by weight, %w/w, from 50-98%, preferably from 60-95%.

Therefore, in this exemplary embodiment, the device 1 comprises an attractant composition 5 contained in the container 2. More preferably, the attractant composition 5 comprise at least:
- an alcohol, preferably ethanol, and
- acetic acid

More preferably, in this exemplary embodiment of the device 1, the attractant composition 5 comprises at least:
- ethanol
- acetic acid and,
optionally:
- methionol and/or acetoin and/or putrescine, and/or ethyl acetate and/or diacetyl
wherein the concentration by weight of ethanol in the composition is in a %w/w range from 50-98%, preferably from 60-95%.

Alternatively, the outer surface of the container 2 can be completely or partially coated with a contact insecticide. As a result, when in use, the device 1 of the invention can be arranged in a working position by suitable means, for example, hanging from or close to a tree, such that dipterous insects, in the example *Drosophila suzukii,* are attracted by the attractant composition 5, and upon coming into contact with the outer surface of the container, the insects are covered in the insecticide and die. Therefore, the device of the first aspect would be suitable for attracting and killing dipterous insects, wherein in the exemplary embodiment, these dipterous insects are from the genus *Drosophila,* preferably from the species *Drosophila suzukii.*

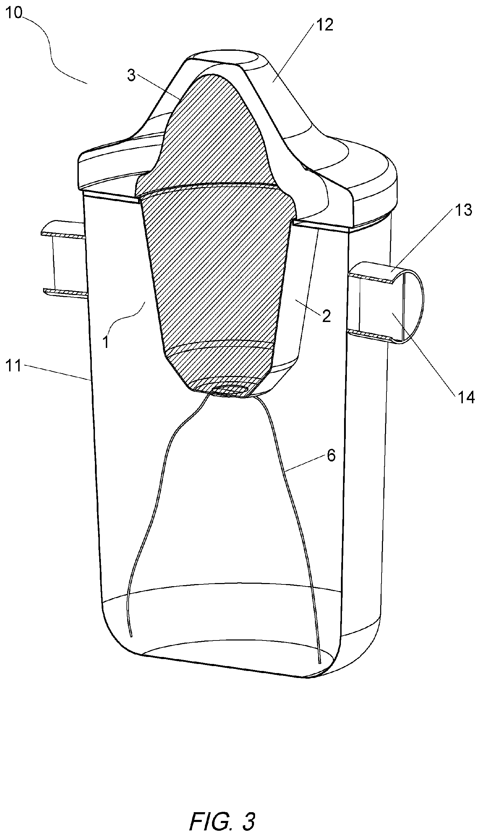

The second aspect of the present invention, illustrated in Figure 3, relates to a trap 10 suitable for trapping and killing dipterous insects, wherein said trap 10 comprises:
a trapping chamber 11 confined by a cover 12 that is coupleable to and removable from said chamber 11, wherein the trapping chamber 11 comprises:
   at least one inlet 13 configured for the entry of dipterous insects, and
   at least one contact insecticide (not shown)
wherein an inner wall (not shown) of the trapping chamber 11 is at least partially coated with the contact insecticide;
and
the device 1 of the first aspect.

Another significant advantage of the invention lies in its simplicity and cost. In particular, the proposed solution does not require additional supporting elements for the device 1 or for the contact insecticide, since the trap 10 itself acts as a support for both. This drastically reduces the cost of use and facilitates its implementation for mass trapping and elimination of dipterous insects. It should be mentioned that, according to the invention, the inner wall of the trapping chamber 11 does not have to be completely coated with contact insecticide in order to cause the death of the insects and to solve the technical problem in question.

In the embodiment illustrated in Figure 3, the device 1 is in the activated position, so the attractant solution 5 is dispensed through the wick 6 for its diffusion. Inverting the trap 10 or inverting the device 1 within the location thereof inside said trap will be enough to transition to a deactivated position.

In another preferred embodiment of the second aspect, the trapping chamber 11 can have a conical, frustoconical, or cylindrical shape with an essentially round base to improve and facilitate insect collection and elimination.

In a preferred embodiment of the trap 10 of the second aspect, the contact insecticide can also be deposited on the walls of the cover 12, therefore the inner wall (not shown) of the cover 12 can also be at least partially coated with the contact insecticide.

In a preferred embodiment of the trap 10 of the second aspect, the cover 12 can be a removable cover, such that the trap 10 can be reused several times or can be emptied when there is a large number of captures.

In another preferred embodiment, the cover 12 is configured to be coupled to the confinement chamber 11 by means of pressure through a blocking system (not shown). Preferably, the blocking system can be a snap-fit system (releasable connection) or a rotation system. Even more preferably, the blocking system is a releasable connection system, wherein the cover 12 is configured with protrusions (not shown) that fit into an edge of the confinement chamber 11 by means of pressure. Alternatively, when the blocking system is by rotation, the cover 12 comprises a groove and the edge of the confinement chamber comprises a tooth-like protrusion suitable for fitting into the groove of the cover 12 by means of rotation of the chamber 11 and/or the cover 12, preferably in anticlockwise direction.

To trap dipterous insects, the trapping chamber 11 comprises at least one inlet 13 configured to allow dipterous insects to go into the trapping chamber 11. Preferably, the trap 10 comprises a plurality of inlets 13 arranged in the walls forming the trapping chamber 11, thereby facilitating the entry of dipterous insects into the trapping chamber 11 and increasing the number of captures per trap 10.

In another preferred embodiment of the trap 10 of the second aspect, the inlet 13 is provided with a blocking part 14 configured to prevent the exit of dipterous insects out of the trapping chamber 11 once they have gone into said trapping chamber 11 and/or to prevent the entry of larger non-target insects other than those of target dipterous insects.

In another preferred embodiment of the trap 10 of the second aspect, the inlet 13 has a circular shape such that the blocking part 14 takes the form of a rib which goes through the inlet 13 diametrically in a circular form; wherein optionally the rib is oriented vertically.

In a preferred embodiment of the second aspect, the inlet 13 is formed in the walls of the trapping chamber 11 from a circular-shaped perforation such that the blocking part 14 takes the form of a rib which goes through the inlet 13 diametrically in the form of a circular perforation; wherein optionally the rib is oriented vertically.

In an even more embodiment, the inlet 13 is formed as a tubular body which is open at both ends and communicates the outside with the inside of the trapping chamber 11, wherein said body tubular projects from the walls of the trapping chamber 11. When the tubular body has a circular shape, the blocking part 14 takes the form of a rib which goes through the tubular body diametrically, wherein said rib is optionally oriented in a vertical manner in said tubular body.

Alternatively, the tubular body projects towards the outside of the trapping chamber 11 or towards the inside of said trapping chamber 11 or with portions oriented both towards the outside and towards the inside of the trapping chamber 11. When multiple inlets 13 according to this embodiment are provided, the projection of each of said tubular bodies from the walls of the trapping chamber will be according to any of the projections described above.

In a preferred embodiment of the second aspect, the trapping chamber 11 is opaque and/or the cover 12 is translucent or opaque. The trap 10 can be manufactured from polymer materials suitable for said preferred embodiment.

As mentioned, in an exemplary embodiment, the attractant composition 5 of the device 1 is particularly indicated for attracting Drosophila type dipterous insects, particularly *Drosophila suzukii.* Such exemplary embodiment can be implemented with the trap 10 described up until now for the mass attraction and capture of such dipterous insects. In that sense, contact insecticide is also formulated specifically to poison *Drosophila suzukii.*

Alternatively, in another embodiment, the attractant composition is a water-based solution which is likewise applicable to the device 1 and/or the trap 10, according to the described teachings *mutatis mutandis.*

A third aspect of the invention relates by way of example to an attractant composition 5 for Drosophila, preferably for *Drosophila suzukii,* i.e., a composition particularly conceived for attracting *Drosophila suzukii,* specifically an alcoholic attractant composition, essentially an alcohol, at least one alcohol selected from the list comprising straight chain, branched, or cyclic C₁-C₁₀, preferably C₁-C₅, alcohols. Preferably, the alcoholic attractant composition 5 comprises an alcohol in a percentage by weight, %w/w, from 50-98%, preferably from 60-95%.

In a preferred embodiment, the attractant composition 5 of the third aspect, preferably suitable for attracting *Drosophila suzukii,* comprises at least:
- an alcohol, preferably ethanol
- acetic acid,
- optionally methionol,
- optionally acetoin and/or putrescine, and
- optionally ethyl acetate and/or diacetyl

In a more preferred embodiment, the attractant composition 5 of the third aspect comprises at least:
- ethanol
- acetic acid
- acetoin
- ethyl acetate
- optionally putrescine
- optionally diacetyl. and
- optionally methionol
wherein the concentration by weight of ethanol in the composition is in a %w/w range from 50-98%, preferably from 60-95%.

In the more preferred embodiment, the attractant composition 5 of the third aspect consists of:
- ethanol
- acetic acid
- acetoin
- ethyl acetate
wherein the concentration by weight of ethanol in the composition is in a %w/w range from 50-98%, preferably from 60-95%.

Unlike the state of the art in which the components are separated for reasons of incompatibility, these attractant solutions/compositions show a high effectiveness as attractants by providing a large number of captures.

The fourth aspect of the invention relates to the use of the device of the first aspect for attracting and/or killing dipterous insects, wherein in particular embodiments these dipterous insects are from the genus *Drosophila,* preferably from the species *Drosophila suzukii.*

## Claims

1. A dipterous insect attracting device (1), comprising:
a container (2) provided with a lower opening (22) arranged in a base (20) of said container (2), said container (2) being configured to contain an attractant composition (5), with the container (2) being impermeable to the attractant (5);
a wick (6) coupleable to the base (20) in fluid communication with the lower opening (22), configured to diffuse said attractant composition (5) by capillarity;
a cover (4) coupleable to the base (20), said cover (4) being configured to secure the wick (6) in the base (20), such that the attractant composition (5) can only be diffused through said wick (6), with the cover (4) being impermeable to the attractant composition (5);
**characterised in that** the container (2) further comprises an upper opening (21) and **in that** the device further comprises
a cap (3) coupled in a leak-tight manner to the upper opening (21) of the container (2) closing same, with the cap (3) being impermeable to the attractant composition (5), the cap (3) being configured to collapse or swell;
wherein the attracting device (1) is configured, for when the container (2) contains said attractant composition (5), to be arranged in an activated position suitable for diffusing the attractant composition (5) through the wick (6), and to be arranged in a deactivated position in which the attractant composition (5) is not diffused through the wick (6), wherein said cap (3) is configured to collapse or swell as the attractant composition (5) is diffused through the wick (6).

2. The device according to any of the preceding claims, wherein the container (2) is rigid and wherein the impermeable material of said container (2) is selected from a list consisting of a polymer material impermeable to the attractant composition (5), wherein said material is selected from the list consisting of polyethylene, high density polyethylene, medium density polyethylene, and low density polyethylene, copolymers of polyethylene, polypropylene, copolymers of polypropylene, polystyrene, polyethylene terephthalate, poly(methyl methacrylate), poly(styrene-acrylonitrile), acrylonitrile butadiene styrene, and mixtures thereof.

3. The device according to any of the preceding claims, wherein said device (1) is invertible such that, in the deactivated position, the attractant composition (5) is not in contact with the wick (6), wherein said attractant composition (5) is deposited or moved away from the lower opening (22), and in the activated position, the device (1) is tipped such that the attractant composition (5) comes into contact with the wick (6), such that the attractant composition (5) is oriented or deposited towards the base (20), leaving the container through the lower opening (22), being diffused through the wick (6).

4. The device according to any of the preceding claims, wherein the cap (3) is coupled to the upper opening (21) by heat sealing, by means of snap-fitting, or by means of screwing.

5. The device according to any of the preceding claims, wherein the cap (3) is flexible and of said cap (3) is selected from a list consisting of a polymer material impermeable to the attractant composition (5), wherein said material is selected from the list consisting of polyethylene, high density polyethylene, medium density polyethylene, and low density polyethylene, copolymers of polyethylene, polypropylene, copolymers of polypropylene, polystyrene, polyethylene terephthalate, poly(methyl methacrylate), poly(styrene-acrylonitrile), acrylonitrile butadiene styrene, and mixtures thereof.

6. The device according to any of the preceding claims, wherein the wick (6) is flexible and is coupled through the cover (4) to the base (20) such that respective free ends thereof remain, wherein the attractant composition (5) is diffused without dripping along the free ends of the wick (6).

7. The device according to any of the preceding claims, wherein the wick (6) is manufactured with a material comprising yarns which in turn comprise fibers of a material selected from the list consisting of cotton, polyamide, polyurethane, and polyester.

8. The device according to any of the preceding claims, wherein the cover (4) consists of a flexible sheet arranged in the base (2) sealing in a leak-tight manner the opening (22) and a portion of the wick (6), such that the attractant composition can only flow through the wick.

9. The device according to any of claims 1-8, wherein the container (2) comprises a layer comprising a contact insecticide, wherein said layer is arranged at least partially on an outer surface of said container (2).

10. A trap (10) for dipterous insects, **characterized in that** it comprises the dipterous insect attracting device (1) according to any of claims 1 to 9.

11. The trap (10) for dipterous insects according to claim 10, comprising:
a trapping chamber (11) confined by a cover (12) coupleable to said chamber (11), wherein the trapping chamber (11) comprises:
at least one inlet (13) suitable for allowing the entry of dipterous insects, and
at least one contact insecticide, wherein an inner wall of the trapping chamber (11) is at least partially coated with the contact insecticide;
and
the attracting device according to any of claims 1 to 9.

12. The trap according to claim 11, wherein the inlet (13) is provided with a blocking part (14) configured to block the exit of the dipterous insects out of the trapping chamber (11) and/or to prevent the entry of larger non-target dipterous insects that are not of the target size, into the trapping chamber (11).

13. The trap according to claims 11 and 12, wherein the trapping chamber (11) comprises a plurality of inlets (13) arranged on walls of the trapping chamber (11) and/or wherein the inlet (13) is circular, such that the blocking part (14) is a diametrically arranged rib.

14. Use of the device according to claim 9 for attracting and/or killing dipterous insects, particularly from the genus *Drosophila,* preferably from the species *Drosophila suzukii.*

## Patentansprüche

1. Lockvorrichtung (1) für Zweiflügler, umfassend:
einen Behälter (2), der mit einer unteren Öffnung (22) versehen ist, die in einem Boden (20) des Behälters (2) angeordnet ist, wobei der Behälter (2) so ausgestaltet ist, dass er eine Lockstoffzusammensetzung (5) enthält und wobei der Behälter (2) für den Lockstoff (5) undurchlässig ist;
einen Docht (6), der mit dem Boden (20) gekoppelt werden kann und in Fluidverbindung mit der unteren Öffnung (22) steht und so ausgestaltet ist, dass er die Lockstoffzusammensetzung (5) durch Kapillarwirkung diffundiert;
eine Abdeckung (4), die mit dem Boden (20) verbunden werden kann, wobei die Abdeckung (4) so ausgestaltet ist, dass sie den Docht (6) im Boden (20) sichert, so dass die Lockstoffzusammensetzung (5) nur durch den Docht (6) diffundieren kann, wobei die Abdeckung (4) für die Lockstoffzusammensetzung (5) undurchlässig ist;
**dadurch gekennzeichnet, dass** der Behälter (2) außerdem eine obere Öffnung (21) aufweist und dass die Vorrichtung außerdem Folgendes umfasst
eine Kappe (3), die dicht mit der oberen Öffnung (21) des Behälters (2) verbunden ist und diesen verschließt, wobei die Kappe (3) für die Lockstoffzusammensetzung (5) undurchlässig ist, und die Kappe (3) so ausgestaltet ist, dass sie zusammenfällt oder aufquillt;
wobei die Lockvorrichtung (1) so ausgestaltet ist, dass sie, wenn der Behälter (2) die Lockstoffzusammensetzung (5) enthält, in einer aktivierten Position angeordnet werden kann, die für das Diffundieren der Lockstoffzusammensetzung (5) durch den Docht (6) geeignet ist, und in einer deaktivierten Position angeordnet werden kann, in der die Lockstoffzusammensetzung (5) nicht durch den Docht (6) diffundiert, wobei die Kappe (3) so ausgestaltet ist, dass sie zusammenfällt oder aufquillt, wenn die Lockstoffzusammensetzung (5) durch den Docht (6) diffundiert.

2. Vorrichtung nach einem der vorhergehenden Ansprüche, wobei der Behälter (2) starr ist und wobei das undurchlässige Material des Behälters (2) aus einer Liste ausgewählt ist, mit für die Lockstoffzusammensetzung (5) undurchlässigen Polymermaterialien, wobei das Material aus der Liste ausgewählt ist, die aus Polyethylen, Polyethylen hoher Dichte, Polyethylen mittlerer Dichte und Polyethylen niedriger Dichte, Copolymeren von Polyethylen, Polypropylen, Copolymeren von Polypropylen, Polystyrol, Polyethylenterephthalat, Poly(methylmethacrylat), Poly(styrol-Acrylnitril), Acrylnitril-Butadien-Styrol und Mischungen davon besteht.

3. Vorrichtung nach einem der vorhergehenden Ansprüche, wobei die Vorrichtung (1) umkehrbar ist, so dass in der deaktivierten Position die Lockstoffzusammensetzung (5) nicht in Kontakt mit dem Docht (6) steht, wobei die Lockstoffzusammensetzung (5) auf die untere Öffnung (22) aufgebracht oder von ihr wegbewegt wird, und in der aktivierten Position die Vorrichtung (1) gekippt wird, so dass die Lockstoffzusammensetzung (5) mit dem Docht (6) in Kontakt kommt, so dass die Lockstoffzusammensetzung (5) sich zum Boden (20) hin ausrichtet oder auf diesem aufgebracht wird, den Behälter durch die untere Öffnung (22) verlässt, wobei sie durch den Docht (6) diffundiert.

4. Vorrichtung nach einem der vorhergehenden Ansprüche, wobei die Kappe (3) durch Heißsiegeln, Einrasten oder Verschrauben mit der oberen Öffnung (21) verbunden ist.

5. Vorrichtung nach einem der vorhergehenden Ansprüche, wobei die Kappe (3) flexibel ist und die genannte Kappe (3) aus einer Liste ausgewählt ist, mit für die Lockstoffzusammensetzung (5) undurchlässigen Polymermaterialen, wobei das Material aus der Liste ausgewählt ist, die aus Polyethylen, Polyethylen hoher Dichte, Polyethylen mittlerer Dichte und Polyethylen niedriger Dichte, Copolymeren von Polyethylen, Polypropylen, Copolymeren von Polypropylen, Polystyrol, Polyethylenterephthalat, Poly(methylmethacrylat), Poly(styrol-Acrylnitril), Acrylnitril-Butadien-Styrol und Mischungen davon besteht.

6. Vorrichtung nach einem der vorhergehenden Ansprüche, wobei der Docht (6) flexibel ist und durch die Abdeckung (4) mit dem Boden (20) verbunden ist, so dass die jeweiligen freien Enden davon verbleiben, wobei die Lockstoffzusammensetzung (5) diffundiert wird, ohne entlang der freien Enden des Dochts (6) zu tropfen.

7. Vorrichtung nach einem der vorhergehenden Ansprüche, wobei der Docht (6) aus einem Material hergestellt ist, das Garne umfasst, die ihrerseits Fasern aus einem Material umfassen, das aus der Liste ausgewählt ist, die aus Baumwolle, Polyamid, Polyurethan und Polyester besteht.

8. Vorrichtung nach einem der vorhergehenden Ansprüche, wobei die Abdeckung (4) aus einer flexiblen Folie besteht, die im Boden (2) angeordnet ist und die Öffnung (22) und einen Abschnitt des Dochtes (6) dicht verschließt, so dass die Lockstoffzusammensetzung nur durch den Docht fließen kann.

9. Vorrichtung nach einem der Ansprüche 1-8, wobei der Behälter (2) eine Schicht umfasst, die ein Kontaktinsektizid enthält, wobei die Schicht zumindest teilweise auf einer Außenfläche des Behälters (2) angeordnet ist.

10. Falle (10) für Zweiflügler, **dadurch gekennzeichnet, dass** sie die Lockvorrichtung (1) für Zweiflügler nach einem der Ansprüche 1 bis 9 umfasst.

11. Falle (10) für Zweiflügler nach Anspruch 10, umfassend:
eine Fangkammer (11), die durch eine mit der Kammer (11) verbindbaren Abdeckung (12) begrenzt ist,
wobei die Fangkammer (11) Folgendes umfasst:
mindestens einen Einlass (13), der geeignet ist, den Eintritt von Zweiflüglern zu ermöglichen, und
mindestens ein Kontaktinsektizid, wobei eine Innenwand der Fangkammer (11) zumindest teilweise mit dem Kontaktinsektizid beschichtet ist; und
die Lockvorrichtung nach einem der Ansprüche 1 bis 9.

12. Falle nach Anspruch 11, wobei der Einlass (13) mit einem Blockierteil (14) versehen ist, das so ausgestaltet ist, dass es den Austritt der Zweiflügler aus der Fangkammer (11) blockiert und/oder den Eintritt größerer Zweiflügler, die nicht die Zielgröße haben, in die Fangkammer (11) verhindert.

13. Falle nach den Ansprüchen 11 und 12, wobei die Fangkammer (11) eine Vielzahl von Einlässen (13) aufweist, die an Wänden der Fangkammer (11) angeordnet sind, und/oder wobei der Einlass (13) kreisförmig ist, so dass das Blockierteil (14) eine diametral angeordnete Rippe ist.

14. Verwendung der Vorrichtung nach Anspruch 9 zum Locken und/oder Töten von Zweiflüglern, insbesondere aus der Gattung *Drosophila,* vorzugsweise aus der Art *Drosophila suzukii.*

## Revendications

1. Dispositif d'attraction d'insectes diptères (1), comprenant :
un récipient (2) pourvu d'une ouverture inférieure (22) agencée dans une base (20) dudit récipient (2), ledit récipient (2) étant conçu pour contenir une composition d'attractif (5), avec le récipient (2) étant imperméable à l'attractif (5) ;
une mèche (6) pouvant être accouplée à la base (20) en communication de fluide avec l'ouverture inférieure (22), conçue pour diffuser ladite composition d'attractif (5) par capillarité ;
un couvercle (4) pouvant être accouplé à la base (20), ledit couvercle (4) étant conçu pour assujettir la mèche (6) dans la base (20), de telle sorte que la composition d'attractif (5) ne peut être diffusée qu'à travers ladite mèche (6), avec le couvercle (4) étant imperméable à la composition d'attractif (5) ;
**caractérisé en ce que** le récipient (2) comprend en outre une ouverture supérieure (21) et **en ce que** le dispositif comprend en outre
un capuchon (3) accouplé de manière étanche aux fuites à l'ouverture supérieure (21) du récipient (2) fermant ce dernier, avec le capuchon (3) étant imperméable à la composition d'attractif (5), le capuchon (3) étant conçu pour s'affaisser ou se gonfler ;
dans lequel le dispositif d'attraction (1) est conçu, pour lorsque le récipient (2) contient ladite composition d'attractif (5), pour être agencé dans une position activée appropriée pour la diffusion de la composition d'attractif (5) à travers la mèche (6), et pour être agencé dans une position désactivée dans laquelle la composition d'attractif (5) n'est pas diffusée à travers la mèche (6), dans lequel ledit capuchon (3) est conçu pour s'affaisser ou se gonfler lorsque la composition d'attractif (5) est diffusée à travers la mèche (6).

2. Dispositif selon l'une quelconque des revendications précédentes, dans lequel le récipient (2) est rigide et dans lequel le matériau imperméable dudit récipient (2) est choisi dans une liste constituée d'un matériau polymère imperméable à la composition d'attractif (5), dans lequel ledit matériau est choisi dans la liste constituée de polyéthylène, polyéthylène de haute densité, polyéthylène de moyenne densité et polyéthylène de faible densité, copolymères de polyéthylène, polypropylène, copolymères de polypropylène, polystyrène, téréphtalate de polyéthylène, poly(méthacrylate de méthyle), poly(styrène-acrylonitrile), acrylonitrile butadiène styrène et des mélanges de ceux-ci.

3. Dispositif selon l'une quelconque des revendications précédentes, dans lequel ledit dispositif (1) est inversable de telle sorte que, dans la position désactivée, la composition d'attractif (5) n'est pas en contact avec la mèche (6), dans lequel ladite composition d'attractif (5) est déposée ou éloignée de l'ouverture inférieure (22), et dans la position activée, le dispositif (1) est basculé de telle sorte que la composition d'attractif (5) entre en contact avec la mèche (6), de telle sorte que la composition d'attractif (5) est orientée ou déposée vers la base (20), quittant le récipient à travers l'ouverture inférieure (22), étant diffusée à travers la mèche (6).

4. Dispositif selon l'une quelconque des revendications précédentes, dans lequel le capuchon (3) est accouplé à l'ouverture supérieure (21) par thermoscellage, au moyen d'encliquetage ou au moyen de vissage.

5. Dispositif selon l'une quelconque des revendications précédentes, dans lequel le capuchon (3) est flexible et ledit capuchon (3) est choisi dans une liste constituée d'un matériau polymère imperméable à la composition d'attractif (5), dans lequel ledit matériau est choisi dans la liste constituée de polyéthylène, polyéthylène de haute densité, polyéthylène de moyenne densité et polyéthylène de faible densité, copolymères de polyéthylène, polypropylène, copolymères de polypropylène, polystyrène, téréphtalate de polyéthylène, poly(méthacrylate de méthyle), poly(styrène-acrylonitrile), acrylonitrile butadiène styrène et des mélanges de ceux-ci.

6. Dispositif selon l'une quelconque des revendications précédentes, dans lequel la mèche (6) est flexible et est accouplée à travers le couvercle (4) à la base (20) de telle sorte que des extrémités libres respectives de ceux-ci restent, dans lequel la composition d'attractif (5) est diffusée sans goutter le long des extrémités libres de la mèche (6).

7. Dispositif selon l'une quelconque des revendications précédentes, dans lequel la mèche (6) est fabriquée avec un matériau comprenant des fils qui, à leur tour, comprennent des fibres d'un matériau choisi dans la liste constituée du coton, du polyamide, du polyuréthane et du polyester.

8. Dispositif selon l'une quelconque des revendications précédentes, dans lequel le couvercle (4) est constitué d'une feuille flexible agencée dans la base (2) et scellant de manière étanche aux fuites l'ouverture (22) et une partie de la mèche (6), de telle sorte que la composition d'attractif ne peut s'écouler qu'à travers la mèche.

9. Dispositif selon l'une quelconque des revendications 1 à 8, dans lequel le récipient (2) comprend une couche comprenant un insecticide de contact, dans lequel ladite couche est agencée au moins partiellement sur une surface externe dudit récipient (2).

10. Piège (10) pour insectes diptères, **caractérisé en ce qu'**il comprend le dispositif d'attraction d'insectes diptères (1) selon l'une quelconque des revendications 1 à 9.

11. Piège (10) pour insectes diptères selon la revendication 10, comprenant :
une chambre de piégeage (11) confinée par un couvercle (12) pouvant être accouplé à ladite chambre (11), dans lequel la chambre de piégeage (11) comprend :
au moins une entrée (13) appropriée pour permettre l'entrée d'insectes diptères, et
au moins un insecticide de contact, dans lequel une paroi interne de la chambre de piégeage (11) est au moins partiellement recouverte de l'insecticide de contact ; et
le dispositif d'attraction selon l'une quelconque des revendications 1 à 9.

12. Piège selon la revendication 11, dans lequel l'entrée (13) est pourvue d'une partie de blocage (14) conçue pour bloquer la sortie des insectes diptères hors de la chambre de piégeage (11) et/ou pour empêcher l'entrée d'insectes diptères non cibles plus grands qui ne sont pas de la taille cible, dans la chambre de piégeage (11).

13. Piège selon les revendications 11 et 12, dans lequel la chambre de piégeage (11) comprend une pluralité d'entrées (13) agencées sur des parois de la chambre de piégeage (11) et/ou dans lequel l'entrée (13) est circulaire, de telle sorte que la partie de blocage (14) est une nervure agencée diamétralement.

14. Utilisation du dispositif selon la revendication 9 pour attirer et/ou tuer des insectes diptères, en particulier du genre *Drosophila,* de préférence de l'espèce *Drosophila suzukii.*
